# EUROPEAN PATENT SPECIFICATION

(11) **EP 4 191 764 B1**
(45) Date of publication and mention of the grant of the patent: **11.06.2025**
(21) Application number: 21930593.5
(22) Date of filing: 15.10.2021
(51) Int. Cl.: H01M 50/20, H01M 50/30, F16K 17/00, H01M 10/625

(54) **BATTERY BOX, BATTERY, AND ELECTRICAL DEVICE**
BATTERIEKASTEN, BATTERIE UND ELEKTRISCHES GERÄT
BOÎTIER DE BATTERIE, BATTERIE ET DISPOSITIF ÉLECTRIQUE

(43) Date of publication of application: 07.06.2023
(73) Proprietor: Contemporary Amperex Technology (Hong Kong) Limited, Central, Central And Western District (HK)
(72) Inventor: MIAO, Huimin, Ningde City, Fujian 352100 (CN); CHEN, Binbin, Ningde City, Fujian 352100 (CN); CHEN, Zhiming, Ningde City, Fujian 352100 (CN); WANG, Qing, Ningde City, Fujian 352100 (CN)
(74) Representative: Ziebig Hengelhaupt Intellectual Property Attorneys Patentanwaltskanzlei PartGmbB
(86) International application number: PCT/CN2021/124207
(87) International publication number: WO 2023/060593

(56) References cited:
- EP-A1- 2 506 336
- CN-A- 107 464 907
- CN-A- 112 018 299
- CN-A- 112 018 300
- CN-A- 112 103 443
- CN-U- 207 441 831
- DE-U1- 202020 101 150
- US-A1- 2012 231 306
- US-A1- 2014 079 964

## Description

### Technical Field

The present application relates to the technical field of batteries, and in particular, to a battery box, a battery and an electrical device.

### Background Art

The key to sustainable development of automobile industry is the energy saving and emission reduction. Electric vehicles, thanks to their advantages of energy saving and environmental protection, have become important for the sustainable development of the automobile industry. For electric vehicles, battery technology is an important factor in their development.

The battery will generate heat during use, which will increase the temperature of the battery. If the battery is at the temperature too high, the battery will be caused to spontaneously ignite or explode. Therefore, the battery needs to be dissipated. The inventor of the present application found in study that the heat dissipation effect of the existing heat dissipation solutions is poor, which will cause problems, such as, abnormal noise is produced during the heat dissipation process. Any of DE2020201 01150U1, EP2506336A1 and CN112018299A disclose different exhaust means.

### Summary

In order to solve the problems of poor heat dissipation effect and abnormal noise during the heat dissipation process, etc., in the prior art, the embodiments of the present application propose a battery box, a battery and an electrical device.

The invention is defined in the appended claims.

On the one hand, an embodiment of the present application proposes a battery box, comprising: a box frame, a heat management component and an outer plate, wherein the heat management component is arranged on one side of the box frame and is configured to adjust temperature of a battery; and the outer plate is arranged adjacent to the heat management component and is configured to cover the heat management component on the box frame, and a balance valve is arranged on the outer plate, and the balance valve is configured to make a cavity between the outer plate and the heat management component communicated with outside air.

Through the above-mentioned embodiments proposed in the present application, the air inside the cavity can be communicated with the outside air. When the air pressure inside the cavity is relatively high, the air inside the cavity diffuses outward through the balance valve, reducing the pressure inside the cavity. The pressures inside and outside the cavity are balanced, thus avoiding the deformation of the outer plate due to the pressure inside the cavity, and also avoiding the looseness between the outer plate and the heat management component to produce abnormal noise.

In some embodiments, the balance valve is disposed both ends of the outer plate. That the balance valve is arranged at both ends of the outer plate can quickly balance the air pressures received at both ends of the outer plate, and reduce the influence which is caused to the outer plate by the air pressure difference between the two ends of the inside of the cavity.

In some embodiments, the balance valve is arranged at center of the outer plate. Taking into account the air pressure in each area in the cavity, the gas in each area can flow out quickly.

In some embodiments, the outer plate is provided with a fixing hole; and the balance valve comprises a balance valve body, and a fixing structure is arranged on the balance valve body, and the fixing structure cooperates with the fixing hole to fix the balance valve on one side of the outer plate. In this way, the installation and maintenance of the balance valve and the use are convenient.

In some embodiments, the balance valve body is provided with a ventilation hole, and the ventilation hole and the fixing hole form a ventilation channel. A ventilation channel is formed by the ventilation hole and the fixing hole, so that the air in the cavity is communicated with the outside, which is beneficial to the rapid balance of the air pressures inside and outside the cavity.

In some embodiments, the fixing structure is a snapping structure; and the snapping structure is arranged as extending along periphery of the ventilation hole toward the outer plate, and is snapped with the fixing hole on the outer plate.

By providing the fixing structure as a snapping structure, the balance valve can be easily snapped on the outer plate. When fixing, it is only necessary to press the balance valve, and the snapping structure passes through the fixing hole and is engaged with the fixing hole, which facilitates the installation of the balance valve. At the same time, through the snapping structure, it can also be easily disassembled, which is convenient for subsequent maintenance.

In some embodiments, the snapping structure has a strain value greater than 15%. With this strain value, the snap-fit structure is less likely to be broken during subsequent use, which ensures the service life of the balance valve.

In some embodiments, width of the fixing hole is greater than width of the snapping structure. In this way, the fixing hole can be used to install the balance valve, and form, together with the ventilation hole, a ventilation channel. There is no need to provide additional ventilation holes on the outer plate, which simplifies the structure and can achieve good ventilation effect.

In some embodiments, the fixing structure is a threaded structure; and the threaded structure is arranged as extending along periphery of the ventilation hole toward the outer plate, an inner threaded structure is correspondingly provided on an inner wall of the fixing hole on the outer plate, and the threaded structure cooperates with the inner threaded structure and is screwed into the fixing hole.

In the above manner, when fixing the balance valve, it is only necessary to twist the balance valve and make it screwed into the fixing hole, to realize the installation and fixing of the balance valve.

In some embodiments, the battery box further comprises further comprising a sealing gasket, wherein the sealing gasket is arranged between the balance valve and the outer plate, and is configured for sealingly connecting the balance valve and the outer plate. When the balance valve body is connected to the outer plate, the sealing gasket is squeezed between the balance valve body and the outer plate, and the sealing gasket is elastically deformed, which squeezes the fixing structure, which can play a better sealing effect between the balance valve and the outer plate.

In some embodiments, the sealing gasket has a compression amount of 40%-60%. The applicant has obtained through experiments that the optimal compression amount was 40%-60%. If the compression amount is too large, it will lead to overpressure of the sealing gasket, which will affect the service life of the sealing gasket. If the compression amount is too small, it will lead to poor sealing.

In some embodiments, a ventilation groove is provided around the ventilation hole, on one side of the balance valve body away from the outer plate; and the ventilation groove, the ventilation hole and the fixing hole together form a ventilation channel.

By arranging the ventilation groove around the ventilation hole, the gas in the cavity is not directly communicated to the ventilation hole, and needs to enter the ventilation hole via the ventilation groove. Therefore, the ventilation channel is bent through the ventilation groove to avoid dust or debris from blocking the ventilation hole.

In some embodiments, positioning protrusions are provided at intervals around the ventilation hole, and ventilation grooves are formed between the positioning protrusions. Ventilation grooves are formed between the positioning protrusions, and the ventilation groove is communicated with the ventilation hole, so that the balance valve is of a more compact structure and a smaller volume.

In some embodiments, the battery box further comprises a balance film, wherein the balance film is arranged as covering the ventilation hole. By providing the balance film, the liquid outside the cavity can be prevented from entering the cavity through the fixing hole and the ventilation hole, and at the same time, the circulation of the gas inside the cavity and the outside gas is not affected, and the waterproof and air-ventilation effects are achieved.

In some embodiments, the balance film is of waterproof and air-ventilation composite material. By providing the balance film, the liquid outside the cavity can be prevented from entering the cavity through the fixing hole and the ventilation hole, and at the same time, the circulation of the gas inside the cavity and the external gas is not affected, and the waterproof and air-ventilation effects are achieved.

In some embodiments, the sealing gasket is in shape of a ring, wherein circumference of an inner ring of the ring is smaller than circumference of an outer ring of the balance film, and circumference of an outer ring of the ring is greater than circumference of an outer ring of the balance film, so that the sealing areas between the sealing gasket and the balance film overlap, so as to achieve a better sealing effect.

In some embodiments, the battery box further comprises a protective cover, wherein the protective cover is arranged as covering one end of the balance valve away from the outer plate.

By providing the protective cover, the balance film of the balance valve can be effectively prevented from being damaged during assembly, transportation and storage. At the same time, by providing the protective cover, the dust or debris in the cavity can also be prevented from falling directly above the ventilation hole to block the ventilation channel.

In some embodiments, the protective cover is arranged as covering the positioning protrusions. In this way, the protective cover can make all the balance film, the balance valve body and the sealing gasket cover the outer plate, and is of a compact structure and a small occupied volume.

On the other hand, an embodiment of the present application further proposes a battery, including a battery cell and the battery box proposed in the above embodiments, wherein the battery cell is disposed in the battery box.

On the other hand, an embodiment of the present application also provides an electrical device, which comprises the battery provided in the above-mentioned embodiments, and the battery is used to provide power.

### Brief Description of Drawings

The drawings described herein are used to provide further understanding on the present application and constitute a part of the present application. The illustrative embodiments and descriptions of the present application are used to explain the present application and do not constitute an improper limitation on the present application. In the drawings:
FIG. 1 is a schematic structural diagram of a vehicle provided by some embodiments of the present application;
FIG. 2 is an exploded schematic diagram of a battery provided by some embodiments of the present application;
FIG. 3 is an exploded schematic diagram of a battery box provided by some embodiments of the present application;
FIG. 4 is a schematic structural diagram of an outer plate provided by some embodiments of the present application;
FIG. 5 is an exploded view of the balance valve and the outer plate, which are fixed, provided by some embodiments of the present application;
Fig. 6 is a partial enlarged view of a balance valve provided by some embodiments of the present application;
FIG. 7 is a structural diagram of another balance valve provided by some embodiments of the present application;
FIG. 8 is a cross-sectional view of a balance valve provided by some embodiments of the present application; and
FIG. 9 is a top view of a balance valve provided by some embodiments of the present application.

Reference Numbers:
battery cell 1000, vehicle 2000, battery 2100, controller 2200, motor 2300, battery box 1100, upper box 110, lower box 120, box frame 100, heat management component 200, outer plate 300, fixing hole 310, balance valve 400, protective cover 410, balance film 420, balance valve body 430, ventilation hole 432, ventilation groove 434, snapping structure 436, threaded structure 437, positioning protrusion 438, sealing gasket 440, first balance valve 500, the second balance valve 600 and the third balance valve 700.

### Detailed Description of Embodiments

Embodiments of the technical solutions of the present application will be described in detail below with reference to the drawings. The following embodiments are only used to illustrate the technical solutions of the present invention more clearly, and therefore only used as examples, and cannot be used to limit the protection scope of the present invention.

Unless otherwise defined, all technical and scientific terms used in the present application have the same meaning as commonly understood by those skilled in the technical field of the present application. The terms used in the present application in the specification of the present application are only for the purpose of describing specific embodiments, not limiting the present application. The terms "comprising" and "comprise" and any variations thereof in the description and claims of the present application and the above drawing description are intended to cover non-exclusive inclusion. The terms "first", "second" and the like in the description and claims of the present application or the above drawings are used to distinguish different objects, rather than to describe a specific order or a primary and secondary relationship.

The "embodiment" mentioned in the present application means that a particular feature, structure, or characteristic, which is described in connection with the embodiment, can be included in at least one embodiment of the present application. The appearances of the term in various places in the specification do not necessarily refer to a same embodiment, or a separate or alternative embodiment that is mutually exclusive of other embodiments. It is explicitly and implicitly understood by those skilled in the art that the embodiments described in the present application may be combined with other embodiments.

In the description of the present application, it should be noted that, unless expressly specified and limited otherwise, the terms, "installed", "connected with", "connected to" and "attached" should be understood in a broad sense. For example, it may be a fixed connection, or a detachable connection, or an integral connection. It can be directly connected, or indirectly connected through an intermediate medium, and it can be internally communicated between two components. For those skilled in the art, the specific meanings of the above terms in the present application can be understood according to specific situations.

The term "and/or" in the present application is only an association relationship to describe associated objects, which means that there can be three kinds of relationships, for example, A and/or B, can mean that A exists alone, A and B exist at the same time, and B exists alone, which are three situations. In addition, the character "/" in the present application generally indicates that the related objects are an "or" relationship.

In the present application, "plural" refers to two or more (including two), and similarly, "plural groups" refers to two or more groups (including two groups), and "plural sheets" refers to two or more sheets (comprises two sheets).

At present, with the development of technology, the power battery is more and more extensively used. Power batteries are used not only in energy storage power systems, such as water, fire, wind and solar power plants, but also in electric vehicles, such as electric bicycles, electric motorcycles, and electric vehicles, as well as military equipment and aerospace and other fields. With the continuous expansion of the application field of power batteries, the market demand is also constantly expanding.

With the increasing use of power batteries, the safety issues of batteries are becoming more and more prominent. At present, the main problem of battery safety is that the temperature of the battery will be caused to rise during operation. If the temperature is not properly controlled, it will cause the battery to spontaneously ignite or even explode. Therefore, how to control the battery temperature and dissipate heat to the battery in time when the battery temperature rises becomes more and more important. At present, the heat dissipation schemes mainly adopted comprise air cooling, water cooling and heat dissipation by other means. Usually, the heat management components are arranged inside the battery box to dissipate heat from the battery as a part of the battery box. The heat management components comprise water cooling boards and heat dissipation sheets, etc.

In one design, heat management components are provided on a part of the battery, which is not the top, such as the bottom or sides. In addition, disposing the heat management components in these parts can avoid the high-voltage electrical cavity on the top of the battery, and prevent the pipeline of the heat management component from being damaged or prevent the liquid produced by condensation, from flowing into the high-voltage electrical cavity. And in order to ensure the sealing protection level requirements of the battery, a sealing will be provided between the heat management component and outer plate of the battery, located on the outside thereof.

However, in the process of use, due to the heat management components having the effect of expanding with heat and contracting with cold on the air, the internal air pressure will change greatly, resulting in the deformation of the sealed outer plate, which will cause abnormal noise during use, affecting experience of customers and also affecting the cooling effect.

In addition, the traditional balance valve is fixed on the sealed casing by screws, and it is often necessary to form a through hole on the installation casing for performing the bolt assembly. The bolt assembly has low installation efficiency and complicated post-processing procedures. On the other hand, traditional balance valve products are large in height, and further large in size, and it is difficult to install them in the confined space of heat management components and battery outer plate. If the balance valve is arranged outside the outer plate, the overall appearance consistency of the battery will be damaged, the volume of the battery will be increased, and the energy density of the battery will be reduced.

Based on the above considerations, in the embodiments of the present application, a balance valve is provided in the battery box, and the balance valve and the outer plate of the battery box are sealingly provided, so that the sealing performance of the battery box can be ensured. At the same time, the balance valve can make the heat dissipation space sealed in the battery box communicated with the external space, so that the internal hot air can be dissipated through the balance valve. On the one hand, it can take away the heat inside the battery box. On the other hand, it also realizes the balance of internal and external air pressures, which avoids the deformation of the outer plate caused by the difference between the internal and external pressures, and also avoids abnormal sound caused by the difference between the internal and external pressures during use of the battery.

The battery box and the battery disclosed in the embodiments of the present application can be used, but not limited to, in electrical devices, such as vehicles, ships, or aircraft. The battery box and the battery disclosed in the present application can be used to form a part of the power supply system of the electric device, which is beneficial to improve the heat dissipation performance of the battery box, thereby improving the safety of the electric device.

The embodiment of the present application provides an electrical device using a battery as a power source, and the electrical device can be, but is not limited to, a mobile phone, a tablet, a notebook computer, an electric toy, an electric tool, a battery car, an electric vehicle, a ship, a spacecraft, and the like. Here, the electric toys may comprise stationary or mobile electric toys, such as, game consoles, electric car toys, electric ship toys, electric airplane toys, etc., and the spacecraft may comprise airplanes, rockets, space shuttles, and spaceships, etc.

For the convenience of description, the following embodiments are described by taking as an example in which an electrical device according to an embodiment of the present application is a vehicle 2000.

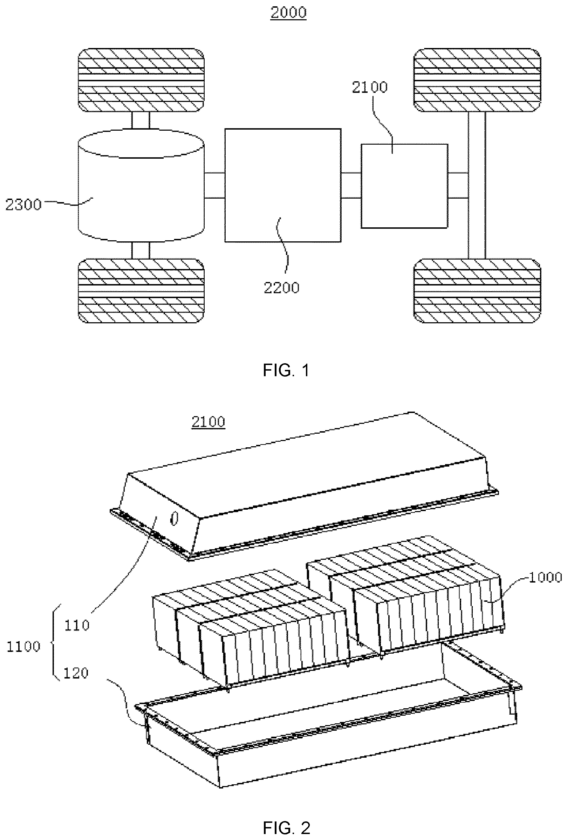

Referring to FIG. 1, it is a schematic structural diagram of a vehicle 2000 according to an embodiment of the present application. The vehicle 2000 may be a fuel vehicle, a gas vehicle, or a new energy vehicle, and the new energy vehicle may be a pure electric vehicle, a hybrid vehicle, or an extended-range vehicle, etc. The vehicle 2000 is provided therein with a battery 2100, and the battery 2100 may be provided at the bottom or the head or the rear of the vehicle 2000. The battery 2100 may be used to power the vehicle 2000, for example, the battery 2100 may serve as an operating power source for the vehicle 2000. The vehicle 2000 may also comprise a controller 2200 and a motor 2300, with the controller 2200 used for controlling the battery 2100 to supply power to the motor 2300, e.g., for work power requirements when starting, navigating, and driving the vehicle 2000.

In some embodiments of the present application, the battery 2100 can not only be used as the operating power source of the vehicle 2000, but also be used as the driving power source of the vehicle 2000, to provide the driving power for the vehicle 2000, replacing or partially replacing the fuel or natural gas.

Referring to FIG. 2, it is an exploded view of a battery 2100 provided by an embodiment of the present application. The battery 2100 comprises a battery box 1100 and a battery cell 1000, and the battery cell 1000 is accommodated in the battery box 1100.

The battery 2100 mentioned in the embodiments of the present application refers to a single physical module including one or more battery cells to provide higher voltage and capacity. For example, the battery 2100 mentioned in the present application may comprise a battery module or a battery pack or the like. There may be a plurality of battery cells 1000, and the plurality of battery cells 1000 may be connected in series or in parallel or in a mixed connection. The mixed connection means that plural battery cells 1000 are connected in series and in parallel. A plurality of battery cells 1000 can be directly connected together in series or in parallel or in the mixed connection, and then the whole composed of the plurality of battery cells 1000 can be accommodated in the battery box 1100. Of course, a plurality of battery cells 1000 can also be connected in series or in parallel or in mixed connection, to form a battery 2100 in the form of a battery module, and then a plurality of battery modules can be connected in series or in parallel or in mixed connection to form a whole which is housed in the battery box 1100. The battery 2100 may further include other structures, for example, the battery 2100 may further include a bus component for realizing the electrical connection between the plurality of battery cells 1000.

The battery box 1100 is used to provide accommodation space for the battery cells 1000, and the battery box 1100 may be of various structures. In some embodiments, the battery box 1100 may comprise an upper box 110 and a lower box 120, wherein the upper box 110 and the lower box 120 are covered with each other, and the upper box 110 and the lower box 120 together define a space for the accommodating space for accommodating the battery cell 1000. The lower box body 120 may be a hollow structure with one end open, the upper box body 110 may be a plate-like structure, and the upper box body 110 covers the open side of the lower box body 120, so that the upper box body 110 and the lower box body 120 together define an accommodating space. It is also possible that each of the upper box body 110 and the lower box body 120 is the hollow structure with one side open, and the open side of the upper box body 110 covers the open side of the lower box body 120. Of course, the battery box 1100 formed by the upper box body 110 and the lower box body 120 may be in various shapes, such as a cylinder, a cuboid, and the like.

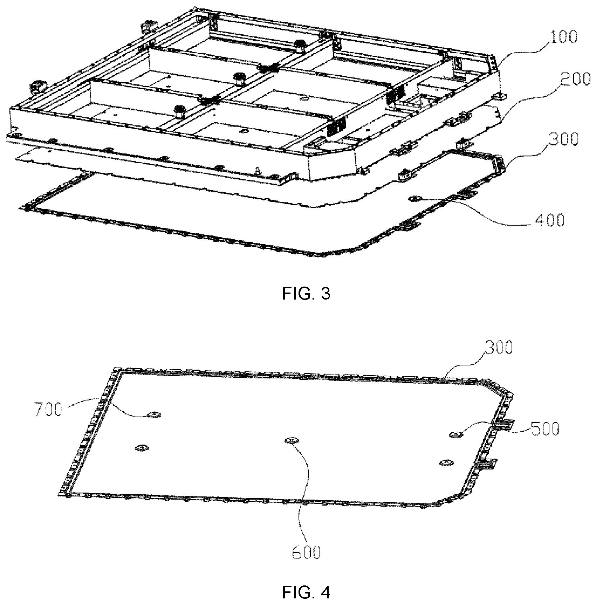

FIG. 3 is a structural diagram of a battery box 1100 provided by an embodiment of the present application, including a box frame 100, a heat management component 200 and an outer plate 300. The heat management component 200 is disposed on one side of the box frame 100 to adjust the temperature of the battery. The outer plate 300 is disposed adjacent to the heat management component 200, for making the heat management component 200 cover the box frame 100. The outer plate 300 is provided with a balance valve 400. The balance valve 400 is used to make the cavity between the outer plate 300 and the heat management component 200 communicated with external air.

As shown in FIG. 3, the box frame 100 is used to carry the battery cell, and is usually made of stainless steel or other hard materials. After the battery cell is fixedly provided on the box frame 100, the battery is provided on the vehicle body through the box frame 100, to provide power to the vehicle.

A heat management component 200 is provided on one side of the box frame 100 for dissipating heat to the battery cell arranged in the box frame 100. The heat management component 200 is usually disposed below the box frame 100 and is attached to the box frame 100, so as to have a better heat dissipation effect. The heat management component 200 comprises a water cooling plate, a heat dissipation plate or other heat dissipation components. The water cooling plate dissipates heat through liquid water. The water-cooling plate comprises an inlet and an outlet of liquid water, and a water-passing pipe is arranged on the water-cooling plate. By inputting cold water into the water-passing pipe, the heat is taken away by utilizing the heat-absorbing properties of liquid water, in the process of water transmission. Of course, other liquid substances can also be used to replace the water for heat dissipation. The heat dissipation plate is generally made of materials that are easy to absorb heat. By contacting the heat source, the heat is quickly removed. In the embodiments of the present application, the specific heat management method is not limited, and the technical solution proposed in the present application can be applied to various heat management solutions.

The outer plate 300 is disposed on the other side of the heat management component 200. It is first sealingly fixed with the heat management component 200, and then they, as a whole, are sealingly fixed with the box frame 100. In order to ensure the sealing protection level of the battery and meet its requirements for waterproof performance, the outer plate 300 and the heat management component 200, as well as the outer plate 300 and the box frame 100 need to be provided to be together in a sealing manner. The outer plate 300, the heat management component 200 and the box frame 100 may be sealingly fixed by screws, or may be provided to be together, directly by welding.

A balance valve 400 is provided on the outer plate 300, and the balance valve 400 is used to make the cavity between the outer plate 300 and the heat management component 200 communicated with external air. Due to the sealing arrangement of the outer plate 300 and the heat management component 200, during the heat dissipation process of the heat management component 200, the gas in the sealed cavity formed by the outer plate 300 and the heat management component 200 may be caused to expand with heat and contract with cold, causing the outer plate to be deformed. At the same time, due to the influence of the gas pressure, loosening or abnormal noise occurs between the outer plate 300 and the heat management component 200. The balance valve 400 is disposed on the outer plate 300. On the one hand, it can isolate external water from entering the cavity formed by the outer plate 300 and the heat management component 200, and on the other hand, it can make the air inside the cavity and the outside air communicated with each other. When the air pressure inside the cavity is relatively high, the air inside the cavity diffuses outward through the balance valve 400, which reduces the pressure inside the cavity and realizes the balance of the pressures inside and outside the cavity, thereby preventing the outer plate 300 from being deformed by the internal pressure of the cavity, and also avoids the occurrence of looseness between the outer plate 300 and the heat management component 200 which causes abnormal noise.

In some embodiments, as shown in FIG. 4, in order that the balance valve 400 better balances the cavity between the outer plate 300 and the heat management component 200 and the external air pressure, a plurality of balance valves 400 are arranged on the outer plate 300, and the balance valves 400 are respectively arranged at both ends of the outer plate 300.

As shown in FIG. 4, the first balance valve 500 and the third balance valve 700 are located at two ends of the outer plate 300 respectively, and the arrangement of the balance valve 400 at both ends of the outer plate 300 is beneficial to balance the gas pressures received at both ends of the outer plate 300, especially when the area of the battery box is relatively large. Due to the different heating conditions of different battery cells, it will cause a relatively large difference in local heating of the battery box, resulting in that the internal gas pressure is unbalanced and the air pressure in the cavity between the heat management component 200 and the outer plate 300 is unbalanced. The balance valves 400 are arranged at both ends of the outer plate 300, which can quickly balance the air pressures received at both ends of the outer plate 300 and reduce the impact on the outer plate 300, which is caused by the air pressure difference between the two ends of the cavity.

In some embodiments, as shown in FIG. 4, the balance valve 400 may also be disposed at the center of the outer plate 300. As shown in FIG. 4, the second balance valve 600 is arranged at the center of the outer plate 300. The center position of the outer plate 300 refers to the non-edge positions of the outer plate 300. In order to facilitate the air circulation in the cavity between the outer plate 300 and the heat management component 200, the balance valve 400 is arranged at the center of the outer plate 300, wherein with taking into account the air pressures in individual areas of the cavity, the gas in each area can flow out quickly. At the same time, the balance valves 400 can also be arranged at both ends and the center position of the outer plate 300, which can realize the rapid circulation of the gas in the cavity and realize the rapid balance of the internal and external gas pressures.

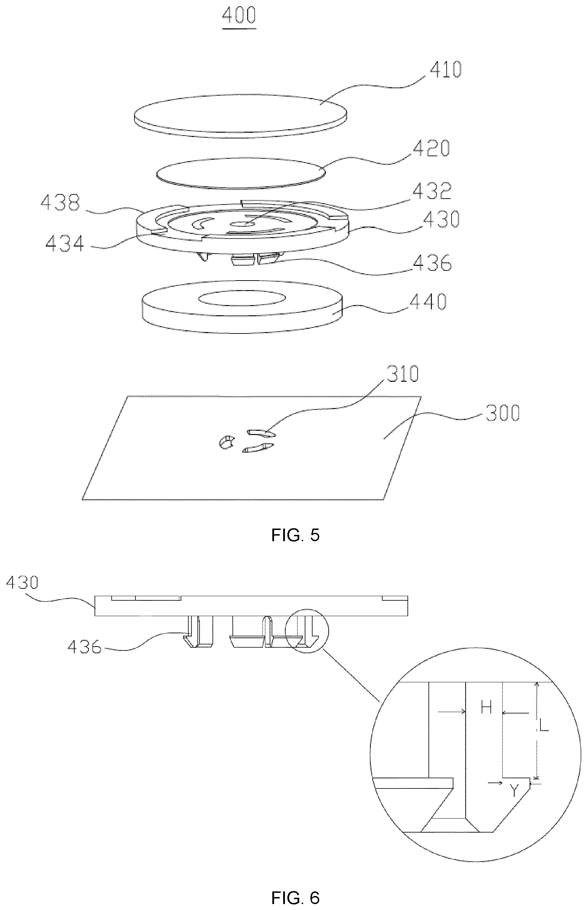

In some embodiments, as shown in FIG. 5, the outer plate 300 is provided with a fixing hole 310; the balance valve 400 comprises a balance valve body 430, a fixing structure is provided on the balance valve body 430, and the fixing structure cooperates with the fixing hole 310, to make the balance valve 400 fixed on one side of the outer plate 300.

The balance valve 400 can be arranged on the outer plate 300 in various ways. For example, the balance valve 400 can be directly welded on the outer plate 300 by means of welding. However, in the case that the balance valve 400 is fixed on the outer plate 300 by welding, when the balance valve 400 malfunctions, there is a problem of inconvenient maintenance. The embodiment of the present application proposes an arranging method. As shown in FIG. 5, in the embodiment of the present application, a fixing hole 310 is arranged on the outer plate 300, and a fixing structure is arranged on the balance valve body 430. The balance valve 400 is fixed on one side of the outer plate 300 through the cooperation of the fixing structure with the fixing hole 310. The fixing hole 310 can be in various shapes, for example, it can be directly a through hole, or it can be through holes with plural special shapes, as long as it can be adapted to the fixing structure, and the balance valve body 430 can be fixed. In this way, the installation and maintenance of the balance valve 400 are facilitated, and the use is convenient.

In some embodiments, the balance valve body 430 is provided with a ventilation hole 432, and the ventilation hole 432 and the fixing hole 310 together form a ventilation channel. In order to enhance the ventilation performance of the balance valve 400, as shown in FIG. 5, a ventilation hole 432 is provided on the balance valve body 430. The ventilation hole 432 and the fixing hole 310 form a ventilation channel, so that the air in the cavity communicates with the outside, which is conducive to the rapid balance of air pressures inside and outside the cavity. The ventilation hole 432 on the balance valve body 430 is arranged at the center of the balance valve body 430, which may be the same as the axis of the fixing hole 310 on the outer plate 300 or staggered. When the ventilation hole 432 and the fixing hole 310 are arranged as staggered, the ventilation channel can be bent to a certain extent in the balance valve body 430 to prevent the gas in the cavity from directly impacting and damaging the balance valve 400, which can improve the service life of the balance valve 400.

In some embodiments, as shown in FIG. 5, the fixing structure is a snapping structure 436. The snapping structure 436 is arranged as extending along the periphery of the ventilation hole 432 toward the outer plate 300, and is connected to the outer plate 300. The fixing holes 310 are snapped together.

In order to realize the quick installation of the balance valve 400, the fixing structure on the balance valve body 430 is provided as a snapping structure 436, and the snapping structure 436 is shown in FIG. 5. The snapping structure 436 is arranged as extending along the periphery of the ventilation hole 432 toward the outer plate 300. One end of the snapping structure 436 is provided with a protrusion outward, and the protrusion is used to cooperate with the fixing hole 310 to be snapped in the fixing hole 310.

As shown in FIG. 6, which is a schematic diagram of the snapping structure 436, the snapping structure 436 is a cantilever beam snapping arm structure. The snapping structure 436 may comprise a plurality of cantilever beam snapping arm structures. The plurality of cantilever beam snapping arm structures are arranged as dispersed. The length L of the snapping arm of the snapping structure 436 is greater than or equal to the thickness of the outer plate 300, H is the thickness of the snapping arm, the deformation amount Y is the height of the protrusion, wherein the setting of the deformation amount Y is related to the strength of the snapping of the balance valve 400. In the embodiment of the present application, the value of the deformation amount Y is determined according to the formula: *Y* = 0.67*ξL*² / *H*. When selecting the material used for the snapping structure 436, firstly the deformation amount of the snapping structure 436 is determined according to experience, to obtain the theoretical strain value through calculation, and then select a material that meets this requirement, according to the theoretical strain value.

By providing the fixing structure as the snapping structure 436, the balance valve 400 can be easily snapped on the outer plate 300. When fixing, it is only necessary to press the balance valve 400, and the snapping structure 436 passes through the fixing hole 310 to be engaged with the fixing hole 310, which facilitates the installation of the balance valve 400. At the same time, through the snapping structure 436, the disassembling can also be easily achieved, which facilitates the subsequent maintenance.

In some embodiments, the strain value of the snapping structure 436 is greater than 15%. In the embodiment of the present application, the applicant obtained through experiments that determining the strain value of the snapping structure 436 to be greater than 15% can achieve a better fixing effect. With this strain value, the snapping structure 436 is not easy to be broken during subsequent use, which ensures the service life of the balance valve 400, and the snapping structure 436 can be made of materials such as PCABS alloy, PPE, PP, or PA, etc.

In some embodiments, the width of the fixing hole 310 is greater than the width of the snapping structure 436. In order to facilitate the gas circulation in the cavity between the outer plate 300 and the heat management component 200 and simplify the structure of the balance valve 400, the width of the fixing hole 310 is set to be larger than the snapping structure 436 in this embodiment of the present application, so that after the balance valve 400 is snapped into the fixing hole 310 through the snapping structure 436, there is still a remaining space in the fixing hole 310 for gas to pass through. In this way, the fixing hole 310 can not only be used to install the balance valve 400, but also form, together with the ventilation hole 432, a ventilation channel. There is no need to provide additional ventilation hole 432 on the outer plate 300, which simplifies the structure and can achieve a good ventilation effect.

In some embodiments, the fixing structure is provided as a threaded structure 437, and the threaded structure 437 is arranged as extending along the periphery of the ventilation hole 432 toward the outer plate 300. The inner wall of the fixing hole 310 on the outer plate 300 is correspondingly provided with an internal threaded structure 437. The threaded structure 437 cooperates with the internal threaded structure 437 to be screwed into the fixing hole 310.

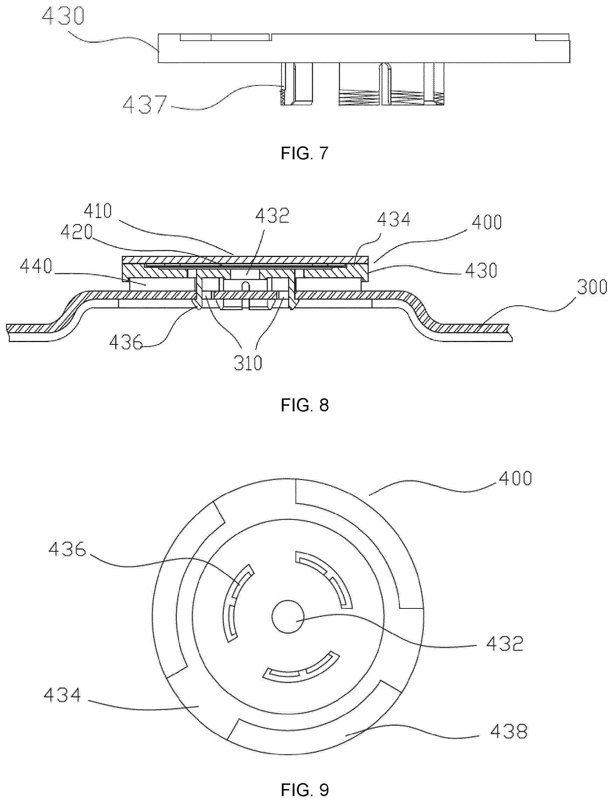

As shown in FIG. 7, the balance valve 400 is provided with a threaded structure 437, which is similar to the snapping structure 436 and is arranged as extending along the periphery of the ventilation hole 432 toward the outer plate 300. External thread is provided on the outer wall of the extending structure. Corresponding to the external thread, an internal threaded structure 437 is provided on the inner wall of the fixing hole 310. The threaded structures 437 cooperate with each other to screw the balance valve 400 into the fixing hole 310. Similar to the snapping structure, the threaded structure 437 fixes the balance valve 400 by means of screwing. When fixing the balance valve 400, it is only necessary to twist the balance valve 400 and screw the balance valve 400 into the fixing hole 310, so that the balance valve 400 can be installed and fixed. Similarly, in order that the ventilation channel still remains in the fixing hole 310 after the balancing valve 400 is installed, the fixing hole 310 is provided to have a hollow structure inside, and the hollow structure communicates with the ventilation hole 432 on the balance valve body 430 to form a ventilation channel.

In some embodiments, the battery box further comprises a sealing gasket 440 disposed between the balance valve 400 and the outer plate 300, for making the balance valve 400 and the outer plate 300 sealingly connected.

Continuing to refer to FIG. 5, it can be seen from FIG. 5 that a sealing gasket 440 is arranged between the balance valve body 430 and the outer plate 300. The sealing gasket 440 is of an annular structure and is sleeved on the outer periphery of the fixing structure. When the balance valve body 430 is connected with the outer plate 300, the sealing gasket 440 is squeezed between the balance valve body 430 and the outer plate 300. The sealing gasket 440 is elastically deformed to squeeze the fixing structure, so as to achieve a better sealing effect between the balance valve 400 and the outer plate 300.

The sealing gasket 440 is made of elastic material, which can ensure that the sealing level between the balance valve body 430 and the outer plate 300 reaches the IPX8 level. In order to achieve a better sealing effect, before the connection, glue can be applied first between the sealing gasket 440 and the balance valve body 430 and between the sealing gasket 440 and the outer plate 300, so that it can achieve a better sealing effect.

In some embodiments, the sealing gasket 440 has a compression amount of 40%-60%. In order to ensure the sealing effect of the sealing gasket 440, the compression amount of the sealing gasket 440 needs to be limited in a certain range after the fixing structure and the outer plate 300 are mounted together. Too little or too much compression amount is not conducive to the sealing. In the embodiment of the present application, the applicant has obtained through experiments that the optimal compression amount is 40%-60%. If the compression amount is too large, the sealing gasket 440 will be caused to be over-pressed, which will affect the service life of the sealing gasket 440. If the compression amount is too small, it will cause occurrence of poor sealing.

In some embodiments, on the side of the balance valve body 400 away from the outer plate 300, a ventilation groove 434 is provided around the ventilation hole 432. The ventilation groove 434, the ventilation hole 432 and the fixing holes 310 together form a ventilation channel.

In the cavity formed by the outer plate 300 and the heat management component 200, foreign matters, such as dust or debris, may sometimes be generated. In order to prevent dust or debris inside the cavity from blocking the ventilation channel, in the embodiment of the present application, ventilation grooves 434 are provided around the ventilation hole 432. The ventilation groove 434 communicates with the ventilation hole 432 and the fixing hole 310 to form together a ventilation channel. Since the ventilation grooves 434 are arranged around the ventilation holes 432, the gas in the cavity is not directly communicated with the ventilation holes 432, but needs to pass through the ventilation groove 434 to enter the ventilation hole 432, so the ventilation channel is bent through the ventilation groove 434 to prevent dust or debris from blocking the ventilation hole 432.

In some embodiments, positioning protrusions 438 are provided at intervals around the ventilation hole 432, and ventilation grooves 434 are formed between the positioning protrusions 438.

As shown in FIG. 5, in order to provide the ventilation grooves 434, positioning protrusions 438 are arranged at intervals around the ventilation hole 432. The ventilation grooves 434 are formed between the positioning protrusions 438 by arranging the positioning protrusions 438 at intervals. The ventilation groove 434 communicates with the ventilation hole 432, so that the balance valve 400 is of a more compact structure and a smaller volume.

In some embodiments, it further comprises a balance film 420, and the balance film 420 covers the ventilation holes 432. As shown in FIG. 5, the balance film 420 has waterproof and air-ventilation function, and is usually made of e-PTFE film material. The waterproof level reaches the IPX8 standard level. The balance film 420 is attached above the ventilation holes 432 on the balance valve body 400 by thermo-compression welding, so as to cover the ventilation holes 432. By providing the balance film 420, the liquid outside the cavity can be prevented from entering the cavity through the fixing holes 310 and the ventilation holes 432, and at the same time, the circulation of the air inside the cavity and the outside air is not affected, and the waterproof and ventilation effects are achieved. The balance film 420 is disposed above the ventilation holes 432 to isolate the ventilation holes 432 from the ventilation grooves 434. On the one hand, the air in the cavity flows out, by passing through the ventilation holes 432, through the ventilation grooves 434, and on the other hand, the liquid entering the fixing holes 310 and the ventilation holes 432 is prevented from entering the cavity through the balance film 420, which has a good waterproof and ventilation effects.

In some embodiments, the balance film 420 is made of a waterproof and air-ventilation composite material. The balance film 420 has the waterproof and ventilation function, and is usually made of e-PTFE film material, and the waterproof level reaches the IPX8 standard level. The balance film 420 is attached above the ventilation holes 432 on the balance valve body 400 by thermo-compression welding, so as to cover the ventilation holes 432. By providing the balance film 420, the liquid outside the cavity can be prevented from entering the cavity through the fixing hole 310 and the ventilation hole 432, and at the same time, the circulation of the gas inside the cavity and the external gas is not affected, and the waterproof and ventilation effects are achieved.

In some embodiments, the sealing gasket 440 is in the shape of a ring. The circumference of the inner ring of the ring is smaller than the circumference of the outer ring of the balance film 420, and the circumference of the outer ring of the ring is larger than the circumference of the outer ring of the balance film 420.

As shown in FIG. 5, the sealing gasket 440 mainly plays the role of sealing between the balance valve body 400 and the outer plate 300, and the balance film 420 mainly plays the role of sealing the ventilation hole 432. In order to achieve a better sealing effect, in this embodiment of the present application, the circumference of the inner ring of the sealing gasket 440 is set to be smaller than the circumference of the outer ring of the balance film 420, and the circumference of the outer ring of the ring is set to be larger than the circumference of the outer ring of the balancing film 420, such that the sealing areas between the sealing gasket 440 and the balance film 420 overlap, so as to achieve a better sealing effect.

In some embodiments, the battery box further comprises a protective cover 410, and the protective cover 410 covers an end of the balance valve 400 away from the outer plate 300. In order to prevent the balance film 420 of the balance valve 400 from being damaged during assembly, transportation and storage, in this embodiment of the present application, a protective cover 410 is provided on the end of the balance valve 400 away from the outer plate 300 to protect the balance film 420. At the same time, by providing the protective cover 410, the dust or debris in the cavity can also be prevented from falling directly above the ventilation hole 432 and blocking the ventilation channel.

In some embodiments, the protective cover 410 covers the positioning protrusions 438. As shown in FIG. 5, in order to make the structure of the balance valve 400 more compact, the protection cover 410 is placed to cover the positioning protrusion 438. In this way, the protective cover 410 can cover all the balance film 420, the balance valve body 400 and the sealing gasket 440 on the outer plate 300, which is of a compact structure and a small occupied volume. At the same time, by making the protective cover 410 cover the positioning protrusions 438, the protective cover 410 and the ventilation groove 434 together form a ventilation channel, which can also prevent the dust or debris in the cavity from directly falling above the ventilation hole 432 and blocking the ventilation channel.

FIG. 8 shows a cross-sectional view of the assembled balance valve 400 in the embodiment of the present application. The outer plate 300 is provided thereon with a fixing hole 310, and a sealing gasket 440 is arranged between the balance valve 400 and the outer plate 300. The fixing structure is arranged in the fixing hole 310, and a balance film 420 and a protective cover 410 are arranged to cover the ventilation hole 432. The balance film 420 separates the ventilation hole 432 from the external liquid to achieve waterproofing and air-ventilation effect. FIG. 9 shows a schematic diagram of a ventilation channel, wherein the fixing hole 310 is in communication with the ventilation hole 432, a ventilation groove 434 is formed between the cover plate and the positioning protrusion 438, and the ventilation groove 434, the ventilation hole 432, and the fixing hole 310 form together a ventilation channel, so as to realize the circulation of the cavity between the outer plate 300 and the heat management component 200 with the external air. The balance valve 400 is fixed on the outer plate 300, forming a compact structure, which is flat and occupies a small space, and therefore it can be well arranged in the narrow space between the outer plate 300 and the heat management component 200, achieving a good waterproof and air-ventilation performance. It can well balance the pressures of the gas in the cavity and the external gas, preventing the deformation of the outer plate 300 and the generation of abnormal noise.

According to some embodiments of the present application, a battery is also provided, and the battery comprises any one of the battery boxes mentioned in the above embodiments. The battery box comprises a box frame 100, a heat management component 200 and an outer plate 300, wherein the heat management component 200 is disposed on one side of the box frame 100 and is used to adjust the temperature of the battery; the outer plate 300 is arranged adjacent to the heat management component 200 for covering the heat management component 200 on the box frame 100, and a balance valve 400 is arranged on the outer plate 300, and the balance valve 400 is used for making the cavity between the outer plate 300 and the heat management component 200 communicated with the outside air. The structure of the battery box proposed in the embodiments of the present application not only improves the heat dissipation performance of the battery box, but also reduces the possibility of deformation of the battery box during use, reduces abnormal noise, and improves the use experience.

According to some embodiments proposed in the present application, an electrical device is also provided, and the electrical device comprises the battery provided in the above embodiments. The battery is used to provide electrical energy for the electrical device. The electrical device can be, but is not limited to, a mobile phone, a tablet, a notebook computer, an electric toy, an electric tool, a battery car, an electric vehicle, a ship, a spacecraft, and the like. Here, the electric toys may comprise stationary or mobile electric toys, such as, game consoles, electric car toys, electric ship toys, electric airplane toys, etc., and the spacecraft may comprise airplanes, rockets, space shuttles, and spaceships.

## Claims

1. A battery box, **characterized by** comprising: a box frame, a heat management component and an outer plate, wherein
the heat management component is arranged on one side of the box frame, and is configured to adjust temperature of a battery; and
the outer plate is arranged adjacent to the heat management component and is configured to cover the heat management component on the box frame, and a balance valve is arranged on the outer plate, and the balance valve is configured to make a cavity between the outer plate and the heat management component communicated with outside air, wherein the outer plate is provided with a fixing hole; and
the balance valve comprises a balance valve body, and a fixing structure is arranged on the balance valve body, and the fixing structure cooperates with the fixing hole to fix the balance valve on one side of the outer plate.

2. The battery box according to claim 1, wherein the balance valve is disposed both ends of the outer plate.

3. The battery box according to claim 1 or 2, wherein the balance valve is arranged at center of the outer plate.

4. The battery box according to claim 1, wherein the balance valve body is provided with a ventilation hole, and the ventilation hole and the fixing hole form a ventilation channel.

5. The battery box according to claim 1 or 4, wherein the fixing structure is a snapping structure; and
the snapping structure is arranged as extending along periphery of the ventilation hole toward the outer plate, and is snapped with the fixing hole on the outer plate.

6. The battery box according to claim 5, wherein the snapping structure has a strain value greater than 15%.

7. The battery box according to claim 5 or 6, wherein a width of the fixing hole is greater than a width of the snapping structure.

8. The battery box according to claim 1 or 4, wherein the fixing structure is a threaded structure; and
the threaded structure is arranged as extending along periphery of the ventilation hole toward the outer plate, an inner threaded structure is correspondingly provided on an inner wall of the fixing hole on the outer plate, and the threaded structure cooperates with the inner threaded structure and is screwed into the fixing hole.

9. The battery box according to any one of claims 1-8, further comprising a sealing gasket,
wherein the sealing gasket is arranged between the balance valve and the outer plate, and is configured for sealingly connecting the balance valve and the outer plate, particularly wherein the sealing gasket has a compression amount of 40%-60%.

10. The battery box according to any one of claims 1-9, wherein a ventilation groove is provided around the ventilation hole, on one side of the balance valve body away from the outer plate; and
the ventilation groove, the ventilation hole and the fixing hole together form a ventilation channel.

11. The battery box according to claim 10, wherein positioning protrusions are provided at intervals around the ventilation hole, and ventilation grooves are formed between the positioning protrusions, particularly comprising a protective cover,
wherein the protective cover is arranged as covering the positioning protrusions.

12. The battery box according to any one of claims 1-11, further comprising a balance film, wherein
the balance film is arranged as covering the ventilation hole, particularly wherein the balance film is of waterproof and air-ventilation composite material.

13. The battery box according to claim 12, wherein the sealing gasket is in shape of a ring, wherein a circumference of an inner ring of the ring is smaller than a circumference of an outer ring of the balance film, and a circumference of an outer ring of the ring is greater than the circumference of the outer ring of the balance film.

14. The battery box according to any one of claims 1-13, further comprising a protective cover,
wherein the protective cover is arranged as covering one end of the balance valve away from the outer plate.

## Patentansprüche

1. Batteriekasten, **dadurch gekennzeichnet, dass** er aufweist: einen Kastenrahmen, eine Wärmeverwaltungskomponente und eine Außenplatte, wobei
die Wärmeverwaltungskomponente an einer Seite des Kastenrahmens angeordnet ist und dazu eingerichtet ist, eine Temperatur einer Batterie anzupassen; und
die Außenplatte neben der Wärmeverwaltungskomponente angeordnet ist und dazu eingerichtet ist, die Wärmeverwaltungskomponente an dem Kastenrahmen abzudecken, und ein Ausgleichsventil an der Außenplatte angeordnet ist und das Ausgleichsventil dazu eingerichtet ist, einen Hohlraum zwischen der Außenplatte und der Wärmeverwaltungskomponente mit Außenluft zu verbinden, wobei die Außenplatte mit einem Befestigungsloch versehen ist; und
das Ausgleichsventil einen Ausgleichsventilkörper aufweist, eine Befestigungsstruktur an dem Ausgleichsventilkörper angeordnet ist und die Befestigungsstruktur mit dem Befestigungsloch zusammenarbeitet, um das Ausgleichsventil an einer Seite der Außenplatte zu befestigen.

2. Batteriekasten nach Anspruch 1, wobei das Ausgleichsventil an beiden Enden der Außenplatte angeordnet ist.

3. Batteriekasten nach Anspruch 1 oder 2, wobei das Ausgleichsventil in der Mitte der Außenplatte angeordnet ist.

4. Batteriekasten nach Anspruch 1, wobei der Ausgleichsventilkörper mit einem Belüftungsloch versehen ist und das Belüftungsloch und das Befestigungsloch einen Belüftungskanal bilden.

5. Batteriekasten nach Anspruch 1 oder 4, wobei die Befestigungsstruktur eine Einraststruktur ist; und
die Einraststruktur derart angeordnet ist, dass sie sich entlang des Randes des Belüftungslochs in Richtung der Außenplatte erstreckt, und in das Befestigungsloch in der Außenplatte eingerastet ist.

6. Batteriekasten nach Anspruch 5, wobei die Einraststruktur einen Dehnungswert aufweist, der größer als 15 % ist.

7. Batteriekasten nach Anspruch 5 oder 6, wobei eine Breite des Befestigungslochs größer als eine Breite der Einraststruktur ist.

8. Batteriekasten nach Anspruch 1 oder 4, wobei die Befestigungsstruktur eine Gewindestruktur ist; und
die Gewindestruktur derart angeordnet ist, dass sie sich entlang des Randes des Belüftungslochs in Richtung der Außenplatte erstreckt, eine Innengewindestruktur entsprechend an einer Innenwand des Befestigungslochs in der Außenplatte bereitgestellt ist und die Gewindestruktur mit der Innengewindestruktur zusammenarbeitet und in das Befestigungsloch geschraubt ist.

9. Batteriekasten nach einem der Ansprüche 1-8, ferner aufweisend eine Dichtung,
wobei die Dichtung zwischen dem Ausgleichsventil und der Außenplatte angeordnet ist und dazu eingerichtet ist, das Ausgleichsventil und die Außenplatte abdichtend zu verbinden, insbesondere wobei die Dichtung einen Kompressionswert von 40 %-60 % aufweist.

10. Batteriekasten nach einem der Ansprüche 1-9, wobei an einer von der Außenplatte fernen Seite des Ausgleichsventilkörpers eine Belüftungsrinne um das Belüftungsloch herum bereitgestellt ist; und
die Belüftungsrinne, das Belüftungsloch und das Befestigungsloch zusammen einen Belüftungskanal bilden.

11. Batteriekasten nach Anspruch 10, wobei Positionierungsvorsprünge in Abständen um das Belüftungsloch herum bereitgestellt sind und Belüftungsrinnen zwischen den Positionierungsvorsprüngen ausgebildet sind, welche insbesondere eine Schutzabdeckung aufweisen,
wobei die Schutzabdeckung derart angeordnet ist, dass sie die Positionierungsvorsprünge abdeckt.

12. Batteriekasten nach einem der Ansprüche 1-11, ferner aufweisend einen Ausgleichsfilm, wobei
der Ausgleichsfilm derart angeordnet ist, dass er das Belüftungsloch bedeckt, insbesondere wobei der Ausgleichsfilm aus einem wasserdichten Belüftungsverbundmaterial ist.

13. Batteriekasten nach Anspruch 12, wobei die Dichtung die Form eines Rings aufweist, wobei ein Umfang eines Innenrings des Rings kleiner als ein Umfang eines Außenrings des Ausgleichsfilms ist und ein Umfang eines Außenrings des Rings größer als der Umfang des Außenrings des Ausgleichsfilms ist.

14. Batteriekasten nach einem der Ansprüche 1-13, ferner aufweisend eine Schutzabdeckung,
wobei die Schutzabdeckung derart angeordnet ist, dass sie ein von der Außenplatte fernes Ende des Ausgleichsventils abdeckt.

## Revendications

1. Boîtier de batterie, **caractérisé par le fait qu'**il comprend: un cadre de boîtier, un élément de gestion de la chaleur et une plaque extérieure, dans lequel
l'élément de gestion de la chaleur est disposé sur un côté du cadre du boîtier, et est conçu pour régler la température d'une batterie; et
la plaque extérieure est disposée de manière adjacente à l'élément de gestion de la chaleur et est conçue pour couvrir l'élément de gestion de la chaleur sur le cadre du boîtier, et une soupape d'équilibrage est disposée sur la plaque extérieure, et la soupape d'équilibrage est conçue pour créer une cavité entre la plaque extérieure et l'élément de gestion de la chaleur communiquant avec l'air extérieur, dans lequel la plaque extérieure est pourvue d'un orifice de fixation; et
la soupape d'équilibrage comprend un corps de soupape d'équilibrage, et une structure de fixation est disposée sur le corps de soupape d'équilibrage, et la structure de fixation coopère avec l'orifice de fixation pour fixer la soupape d'équilibrage sur un côté de la plaque extérieure.

2. Boîtier de batterie selon la revendication 1, dans lequel la soupape d'équilibrage est disposée aux deux extrémités de la plaque extérieure.

3. Boîtier de batterie selon la revendication 1 ou 2, dans lequel la soupape d'équilibrage est disposée au centre de la plaque extérieure.

4. Boîtier de batterie selon la revendication 1, dans lequel le corps de soupape d'équilibrage est pourvu d'un orifice de ventilation, et l'orifice de ventilation et l'orifice de fixation forment un canal de ventilation.

5. Boîtier de batterie selon la revendication 1 ou 4, dans lequel la structure de fixation est une structure d'encliquetage; et
la structure d'encliquetage est disposée de manière à s'étendre le long de la périphérie de l'orifice de ventilation vers la plaque extérieure, et est encliquetée avec l'orifice de fixation sur la plaque extérieure.

6. Boîtier de batterie selon la revendication 5, dans lequel la structure d'encliquetage présente une valeur de déformation supérieure à 15 %.

7. Boîtier de batterie selon la revendication 5 ou 6, dans lequel une largeur de l'orifice de fixation est supérieure à une largeur de la structure d'encliquetage.

8. Boîtier de batterie selon la revendication 1 ou 4, dans lequel la structure de fixation est une structure filetée; et
la structure filetée est disposée de manière à s'étendre le long de la périphérie de l'orifice de ventilation vers la plaque extérieure, une structure filetée intérieure est prévue en conséquence sur une paroi interne de l'orifice de fixation sur la plaque extérieure, et la structure filetée coopère avec la structure filetée intérieure et est vissée dans l'orifice de fixation.

9. Boîtier de batterie selon l'une quelconque des revendications 1 à 8, comprenant en outre un joint d'étanchéité,
dans lequel le joint d'étanchéité est disposé entre la soupape d'équilibrage et la plaque extérieure, et est conçu pour relier de manière étanche la soupape d'équilibrage et la plaque extérieure, en particulier dans lequel le joint d'étanchéité présente un degré de compression de 40 % à 60 %.

10. Boîtier de batterie selon l'une quelconque des revendications 1 à 9, dans lequel une rainure de ventilation est prévue autour de l'orifice de ventilation, sur un côté du corps de soupape d'équilibrage éloignée de la plaque extérieure; et
la rainure de ventilation, l'orifice de ventilation et l'orifice de fixation forment ensemble un canal de ventilation.

11. Boîtier de batterie selon la revendication 10, dans lequel des saillies de positionnement sont prévues à des intervalles autour de l'orifice de ventilation, et des rainures de ventilation sont formées entre les saillies de positionnement, comprenant en particulier un couvercle de protection,
dans lequel le couvercle de protection est disposé de manière à couvrir les saillies de positionnement.

12. Boîtier de batterie selon l'une quelconque des revendications 1 à 11, comprenant en outre un film d'équilibrage, dans lequel
le film d'équilibrage est disposé de manière à couvrir l'orifice ventilation, en particulier dans lequel le film d'équilibrage est constitué d'un matériau composite étanche et ventilé.

13. Boîtier de batterie selon la revendication 12, dans lequel le joint d'étanchéité est en forme d'anneau, dans lequel une circonférence d'un anneau intérieur de l'anneau est inférieure à une circonférence d'un anneau extérieur du film d'équilibrage, et une circonférence d'un anneau extérieur de l'anneau est supérieure à la circonférence de l'anneau extérieur du film d'équilibrage.

14. Boîtier de batterie selon l'une quelconque des revendications 1 à 13, comprenant en outre un couvercle de protection,
dans lequel le couvercle de protection est disposé de manière à couvrir une extrémité de la soupape d'équilibrage éloignée de la plaque extérieure.
